# FASCICULE DE BREVET EUROPEEN

(11) **EP 3 892 532 B1**
(45) Date de publication et mention de la délivrance du brevet: **07.06.2023**
(21) Numéro de dépôt: 21164786.2
(22) Date de dépôt: 25.03.2021
(51) Int. Cl.: B64B 1/38, B64B 1/60

(54) **SYSTÈME D'ASCENSION STRATOSPHÉRIQUE À BALLONNET PARTIEL**
STRATOSPHÄREN-AUFSTIEGSSYSTEM MIT TEILBALLON
SYSTEM FOR RISING THROUGH THE STRATOSPHERE WITH PARTIAL BALLOON

(30) Priorité: 09.04.2020 FR 2003569
(43) Date de publication de la demande: 13.10.2021
(73) Titulaire: THALES, 92400 Courbevoie (FR)
(72) Inventeur: DU PONTAVICE, Emmanuel, 06156 CANNES (FR); GLAENZER, Louis, 06156 CANNES (FR)
(74) Mandataire: Atout PI Laplace

(56) Documents cités:
- CN-A- 104 590 540
- DE-C- 696 253
- US-A1- 2001 002 686
- US-A1- 2009 114 768
- US-B2- 7 469 857

## Description

La présente invention concerne le domaine des dispositifs de portabilité variable utilisant un gaz plus léger que l'air pour s'élever dans l'atmosphère. Plus précisément, l'invention a trait aux stratégies d'ascension et phase de vol en ascendance des dispositifs de portabilité variable munis d'un réservoir pour stocker sous pression de l'air et d'un autre réservoir pour stocker sous pression le gaz plus léger que l'air tel que l'hélium, le néon, le méthane, l'éthane et l'hydrogène. Par la suite, le gaz de masse volumique inférieure à la masse volumique de l'air sera appelé gaz porteur.

Un dispositif de portabilité variable peut être interprété comme une plateforme dirigeable stratosphérique à enveloppe souple pressurisée, connue sous l'appellation anglo-saxonne « Blimp ».

Traditionnellement, lors des phases de décollage, le dispositif de portabilité variable est rempli en majorité d'air, le gaz porteur est séparé de l'air et représente moins de 20% du volume. En phase d'ascension, l'air est évacué et le gaz porteur se détend pour remplir l'intégralité du volume du dispositif de portabilité variable.

Actuellement, cette phase d'ascension peut être négociée de trois manières :
- La technique d'ascension dégonflée qui présente un dispositif de portabilité variable contenant uniquement, au décollage, le gaz porteur. Grâce à l'absence du réservoir d'air, la masse totale du dispositif de portabilité variable diminue grandement. Cette méthode est particulièrement appréciée dans le domaine de la météorologie. Néanmoins, la méthode d'ascension dégonflée est inadaptée pour des dispositifs de portabilité variable comptant des équipements sur l'enveloppe tels que des moteurs ou générateurs solaires qui nécessitent un support relativement rigide sur lequel les systèmes sont fixés.
- La méthode du ballonnet d'air qui présente un dispositif de portabilité variable doté d'une enveloppe principale destinée à contenir le gaz porteur et d'un ballonnet hermétique, contenu à l'intérieur de l'enveloppe principale, destiné à contenir de l'air. Pendant la phase d'ascendance, le ballonnet hermétique se vide de l'air qu'il contient vers le milieu extérieur et le gaz porteur se détend, prenant ainsi le volume libéré par le ballonnet hermétique. Cependant, la méthode du ballonnet d'air est une méthode relativement lourde puisque le dispositif de portabilité variable doit contenir deux réservoirs. De plus, cette méthode présente certains risques comme, par exemple, un risque de pollution du gaz porteur par l'air en cas de fuite du ballonnet hermétique ou encore un risque de perturbation de la manoeuvrabilité avec la présence du ballonnet hermétique vide sans fixation dans l'enveloppe principale.
- La méthode du ballonnet de gaz porteur qui présente un dispositif de portabilité variable doté d'une enveloppe principale destinée à contenir de l'air et d'un ballonnet hermétique, contenu à l'intérieur de l'enveloppe principale, destiné à contenir le gaz porteur. Néanmoins, des problèmes d'aménagement du dispositif de portabilité variable ont été mis en lumière et certains risques peuvent être énoncés comme le risque de fuite liée à d'éventuels dommages sur le ballonnet hermétique. Bien que cette méthode soit appréciée dans le domaine aéronautique, elle reste, comme la méthode du ballonnet d'air, une méthode relativement lourde. C'est notamment le cas apprécié dans le cadre des documents US 2001/002686 A1 et US 7 469 857 B2.

L'invention vise à pallier tout ou partie des problèmes cités plus haut en proposant un dispositif de portabilité variable comprenant une enveloppe principale destinée à contenir de l'air et un ou deux ballonnets hermétiques, contenus dans l'enveloppe principale, destiné(s) à contenir un gaz porteur. Dans le cas où deux ballonnets hermétiques sont utilisés, ils sont reliés fluidiquement l'un à l'autre afin de permettre un échange du gaz porteur.

A cet effet, l'invention a pour objet un dispositif de portabilité variable caractérisé en ce qu'il comporte :
- une enceinte hermétique sous pression accueillant de l'air,
- un premier ballonnet hermétique disposé à l'intérieur de l'enceinte hermétique accueillant sous pression un gaz de masse volumique inférieure à la masse volumique de l'air, le premier ballonnet hermétique comportant un moyen de perforation du premier ballonnet hermétique configuré pour libérer le gaz de masse volumique inférieure à la masse volumique de l'air dans l'enceinte hermétique de sorte que l'enceinte hermétique contienne l'air et le gaz de masse volumique inférieure à la masse volumique de l'air en contact l'un avec l'autre.

Selon un aspect de l'invention, le dispositif de portabilité variable comporte un second ballonnet hermétique disposé à l'intérieur de l'enceinte hermétique et connecté fluidiquement au premier ballonnet hermétique.

Selon un aspect de l'invention, l'enceinte hermétique comprend une proue et le premier ballonnet hermétique est disposé contre une face interne de la proue de l'enceinte hermétique.

Selon un aspect de l'invention, l'enceinte hermétique comprend une surface supérieure et le second ballonnet hermétique est disposé contre la surface supérieure de l'enceinte hermétique.

Selon un aspect de l'invention, l'enceinte hermétique comprend une poupe et au moins une vanne d'évacuation est disposée contre la poupe de l'enceinte hermétique.

Selon un aspect de l'invention, le premier ballonnet hermétique est réalisé à partir d'un matériau plastique.

Selon un aspect de l'invention, l'enceinte hermétique comprend un dispositif de rétractation du premier ballonnet hermétique et le dispositif de rétractation du premier ballonnet hermétique comprend un enrouleur en contact direct avec la face interne de la proue de l'enceinte hermétique, le dispositif de rétractation du premier ballonnet hermétique comprend une liaison filaire dont une première extrémité e1 est en contact avec l'enrouleur, une seconde extrémité e2 est en contact avec le premier ballonnet hermétique.

Selon un aspect de l'invention, le dispositif de portabilité variable s'étend selon un premier axe longitudinal A1 et comprend un dispositif d'inclinaison additionnel disposé contre le dispositif de portabilité variable.

Selon un aspect de l'invention, le dispositif d'inclinaison additionnel comprend une mobilité transversale selon l'axe longitudinal A1 d'une position d'équilibre P1 à une position reculée P2.

Selon un aspect de l'invention, le moyen de perforation du premier ballonnet hermétique est actionné à l'aide d'un contrôleur.

Selon un aspect de l'invention, le premier ballonnet hermétique est interchangeable.

L'invention sera mieux comprise et d'autres avantages apparaîtront à la lecture de la description détaillée d'un mode de réalisation donné à titre d'exemple, description illustrée par le dessin joint dans lequel :
La figure 1 représente une vue schématisée du dispositif de portabilité variable selon l'invention ;
La figure 2 représente une vue schématisée du dispositif de portabilité variable selon l'invention lors de l'amorce d'une phase d'ascension ;
La figure 3 représente une vue schématisée du dispositif de portabilité variable selon l'invention lors d'une phase d'ascension avancée ;
La figure 4 représente une vue schématisée du dispositif de portabilité variable selon une variante de l'invention ;
La figure 5 représente une vue schématisée du dispositif de rétractation du premier ballonnet hermétique à l'intérieur du dispositif de portabilité variable selon l'invention.

Par souci de clarté, les mêmes éléments porteront les mêmes repères dans les différentes figures.

Dans la présente description, le terme « gaz porteur » représente tous gaz de masse volumique inférieure à la masse volumique de l'air. A titre d'exemple, il peut s'agir d'hélium, de néon, de méthane, d'éthane ou d'hydrogène.

Dans la présente description, le terme « proue » peut être interprété comme le nez ou la face avant du dispositif de portabilité variable. A l'inverse, le terme « poupe » désigne la queue ou la face arrière du dispositif de portabilité variable.

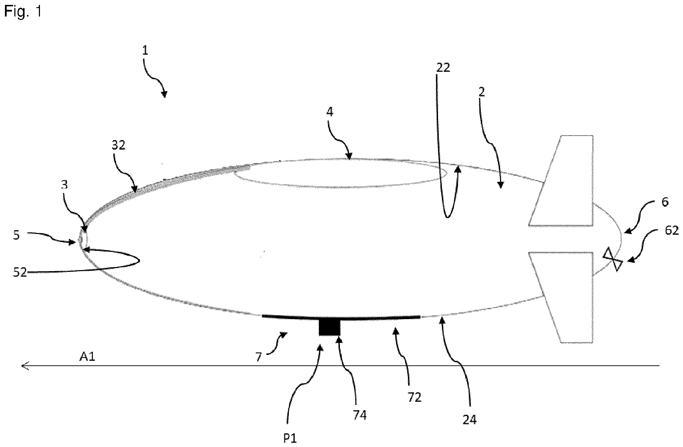

La figure 1 représente une vue schématisée d'un mode de réalisation du dispositif de portabilité variable 1 selon l'invention. Dans le domaine de l'aéronautique, le poids, directement lié à la masse globale des dispositifs de portabilité variable, est l'une des forces contre lesquelles les avionneurs doivent lutter. C'est d'autant plus le cas pour les phases d'ascension d'un dispositif de portabilité variable.

Le dispositif de portabilité variable 1, selon l'invention, est constitué d'une enveloppe hermétique 2. Cette enceinte hermétique 2 est totalement remplie d'air. En outre, l'enceinte hermétique 2 comprend un premier ballonnet hermétique 3 et un second ballonnet hermétique 4 disposés à l'intérieur de l'enceinte hermétique 2 accueillant sous pression un gaz porteur. Le premier ballonnet hermétique 3 est disposé contre une face interne 52 de la proue 5 de l'enceinte hermétique 2. En effet, le dispositif de portabilité variable 1 comprend une proue 5 qui peut être défini comme la section avant selon le sens d'écoulement du flux d'air, soit parallèlement à un axe longitudinal A1 du dispositif de portabilité variable et une poupe 6 qui peut être définie comme la partie opposée au sens de traction ou, en d'autres termes, la partie arrière considérée dans le sens de l'écoulement du flux d'air parallèlement à l'axe longitudinal A1. Le premier ballonnet hermétique 3 est donc disposé contre la face interne 52 de la proue 5 et à l'intérieur de l'enceinte hermétique 2. Le second ballonnet hermétique 4 est disposé contre une surface supérieure 22 de l'enceinte hermétique 2.

Le second ballonnet hermétique 4, disposé à l'intérieur de l'enceinte hermétique 2, est connecté fluidiquement au premier ballonnet hermétique 3. En effet, une jonction 32 assure la connexion fluidique entre le premier ballonnet hermétique 3 et le second ballonnet hermétique 4. De cette manière, le gaz porteur contenu dans le second ballonnet hermétique 4 peut transiter jusqu'au premier ballonnet hermétique 3 grâce à cette jonction 32.

Le premier ballonnet hermétique 3 et le second ballonnet hermétique 4 possèdent chacun un volume de gaz porteur comprimé qui, dans les conditions de pression et température stratosphériques, permettra de remplir un volume légèrement supérieur au volume de l'enceinte hermétique 2.

En outre, au moins une vanne d'évacuation 62 est disposée au niveau de la poupe 6. Cette vanne d'évacuation 62 permet d'expulser l'air contenu à l'intérieur de l'enceinte hermétique 2 vers le milieu extérieur au dispositif de portabilité variable 1.

Enfin, dans un mode de réalisation avantageux, le dispositif de portabilité variable 1 peut comprendre un dispositif d'inclinaison additionnel 7 disposé contre le dispositif de portabilité variable 1. Plus précisément, le dispositif d'inclinaison additionnel 7 est placé contre une surface inférieure 24 de l'enceinte hermétique 2 à l'extérieur du dispositif de portabilité variable 1. Ce dispositif d'inclinaison additionnel 7 comprend un rail de déplacement 72 fixé contre la surface inférieure 24 de l'enceinte hermétique 2 et s'étendant selon l'axe longitudinal A1 et une masse d'inclinaison 74 capable de se déplacer le long du rail de déplacement 72. La masse d'inclinaison 74 possède donc une liberté de mouvement selon l'axe longitudinal A1. Ainsi, par l'intermédiaire de cette liberté de mouvement selon l'axe longitudinal A1, le dispositif d'inclinaison additionnel 7 permet de contrôler l'angle d'assiette du dispositif de portabilité variable 1, c'est-à-dire l'angle entre le plan horizontal et l'axe longitudinal A1 du dispositif de portabilité variable 1.

Ainsi, lorsqu'il n'est pas nécessaire d'influencer l'angle d'assiette du dispositif de portabilité variable 1, le dispositif d'inclinaison additionnel 7 est dans une position d'équilibre P1, comme représenté en figure 1. Dans cette position d'équilibre P1, le centre de masse global du dispositif de portabilité variable 1 est centré et maintient le dispositif de portabilité variable 1 dans le plan horizontal.

Lors de la phase précédant le décollage du dispositif de portabilité variable 1, seul le second ballonnet hermétique 4 est rempli du volume comprimé de gaz porteur. Le premier ballonnet hermétique 3 est donc partiellement vide. En effet, cela permet de stabiliser le dispositif de portabilité variable 1 horizontalement au sol.

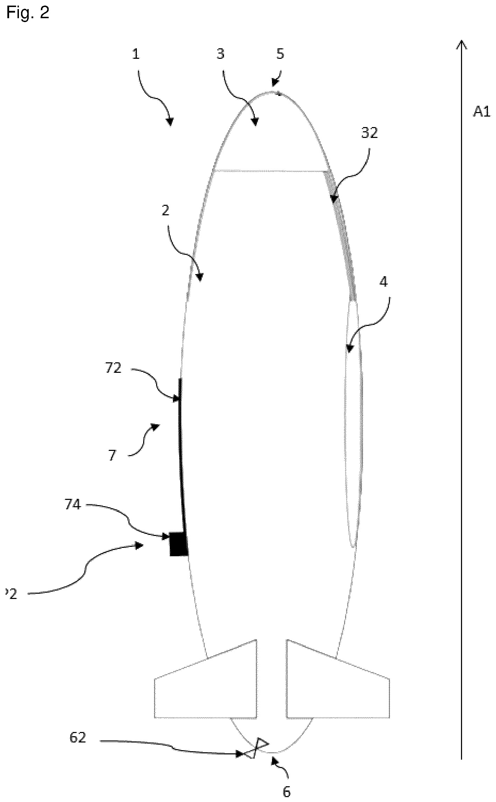

Lorsque le décollage se met en place et l'ascension débute, le dispositif de portabilité variable 1 se place à la verticale, comme représenté en figure 2. Grâce à un basculement du centre de masse du dispositif de portabilité variable 1 vers une position plus reculée par rapport au centre du volume du dispositif de portabilité variable 1 et donc par la création d'un couple à cabrer du dispositif de portabilité variable 1 en passant d'une position dite horizontale, comme représentée en figure 1, à une position verticale comme représentée en figure 2. En position verticale, la proue 5 pointe alors dans une direction de l'ascension qui est la direction de montée du dispositif de portabilité variable 1, alors que la poupe 6 pointe dans la direction opposée, c'est-à-dire vers le sol. De plus, l'axe longitudinal A1 subit aussi une rotation horaire afin d'être parallèle et dans la même direction que la direction d'ascension.

En outre, afin de faciliter la démarche de mise en position verticale du dispositif de portabilité variable 1, le dispositif d'inclinaison additionnel 7 passe alors d'une position d'équilibre à une position reculée. En effet, le dispositif d'inclinaison additionnel 7 comprend, comme dit précédemment, une mobilité transversale selon l'axe longitudinal A1. Ainsi, la masse d'inclinaison 74 coulisse sur le rail de déplacement 72 afin de permettre au dispositif d'inclinaison additionnel 7 de passer de la position d'équilibre P1 à une position reculée P2 représentée en figure 2. Cette position reculée P2 influe sur le centre de masse globale du dispositif de portabilité variable 1 en modifiant sa position. En effet, le centre de masse recule selon l'axe transversal A1 en direction de la poupe 6 ce qui facilite la mise en position verticale du dispositif de portabilité variable 1.En effet, le gaz porteur, contenu dans le second ballonnet hermétique 4, traverse la jonction 32 afin de se positionner dans le premier ballonnet hermétique 3. A partir du décollage du dispositif de portabilité variable 1, le second ballonnet hermétique 4 contient de moins en moins de gaz porteur au profit du premier ballonnet hermétique 3. De plus, le gaz porteur, une fois contenu dans le premier ballonnet hermétique 3, se détend du fait de la montée en altitude du dispositif de portabilité 1 et augmente le volume du premier ballonnet hermétique 3. Le premier ballonnet hermétique 3 est réalisé à partir d'un matériau déformable tel qu'un type de plastique ou autre élastomère. Plus précisément, la paroi du premier ballonnet hermétique 3 est réalisée dans un matériau plastique.

L'augmentation du volume du premier ballonnet hermétique 3 implique une diminution du volume d'air compris à l'intérieur de l'enceinte hermétique 2. Or, afin de maintenir un niveau de surpression contrôlé à l'intérieur du dispositif de portabilité variable 1, la vanne d'évacuation 62 expulse l'air. Par ailleurs, cette expulsion de l'air contenu dans l'enceinte hermétique 2 induit une diminution du poids de l'air dans l'enceinte hermétique 2, ce qui permet la montée, par l'intermédiaire de la poussée d'Archimède, du dispositif de portabilité variable 1.

Cela se traduit alors par une phase d'ascension progressive du dispositif de portabilité variable 1.

Ainsi, au fur et à mesure de l'ascension du dispositif de portabilité variable 1, le gaz porteur contenu dans le premier ballonnet hermétique 3 se détend, ce qui induit une augmentation du volume du premier ballonnet hermétique 3. Or, afin de maintenir un volume constant de l'enceinte hermétique 2, le volume d'air compris dans l'enceinte hermétique 2 doit donc diminuer. Ainsi, la vanne d'évacuation 62 expulse continuellement, et tout le long de la phase d'ascension du dispositif de portabilité variable 1, l'air continu dans l'enceinte hermétique 2.

De cette manière, le volume d'air contenu dans l'enceinte hermétique 2 diminue au profit du volume du premier ballonnet hermétique 3.

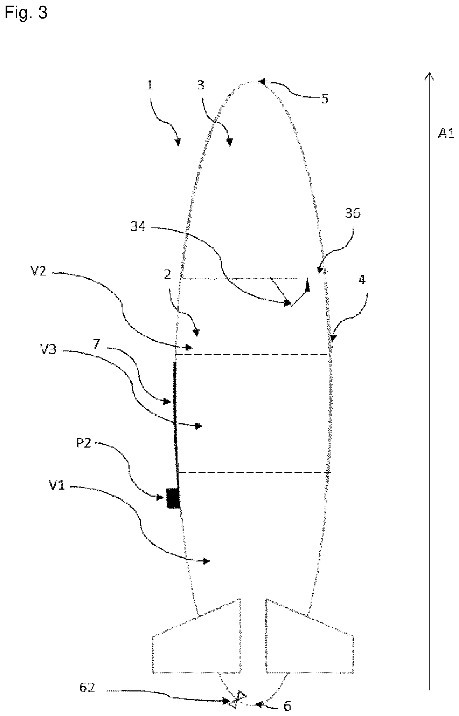

La diminution du volume d'air contenu dans l'enceinte hermétique 2 en parallèle de l'augmentation du volume du premier ballonnet hermétique 3 se poursuit jusqu'à l'ouverture du premier ballonnet hermétique 3 comme représentée en figure 3. La taille du premier ballonnet hermétique 3 est choisie pour que son ouverture intervienne après les phases les plus turbulentes de l'ascension. L'ouverture du premier ballonnet hermétique 3 peut donc par exemple se produire à la moitié de l'ascension, ou encore lorsque la pression extérieure a été divisée par 3 par rapport à la pression au sol, ou alors lorsque le dispositif de portabilité variable 1 a traversé la majorité des turbulences. Avantageusement, le premier ballonnet hermétique 3 est un ballonnet interchangeable, une fois le dispositif de portabilité variable 1 au sol, c'est-à-dire que le premier ballonnet hermétique 3 peut être remplacé lorsqu'il est ouvert par un autre ballonnet hermétique. Ce n'est pas le cas du second ballonnet hermétique 4 qui est un ballonnet hermétique permanent.

En effet, le premier ballonnet hermétique 3 comporte un moyen de perforation 34 du premier ballonnet hermétique 3 permettant d'ouvrir le premier ballonnet hermétique 3 et de libérer le gaz porteur dans l'enceinte hermétique 2. Préférentiellement, le moyen de perforation 34 du premier ballonnet hermétique 3 peut être la pression interne générée par la détente du gaz porteur contenu dans le premier ballonnet hermétique 3. La pression interne générée par la détente du gaz porteur augmentant continuellement, la limite élastique du premier ballonnet hermétique 3 est atteinte et une ouverture 36 du premier ballonnet hermétique 3 peut être observée. Le moyen de perforation 34 du premier ballonnet hermétique 3 peut être un dispositif mécanique actionné à l'aide d'un contrôleur comme par exemple un dispositif comprenant une aiguille ou une lame aiguisée.

Le volume compris dans l'enceinte hermétique 2 n'est alors plus rempli uniquement d'air mais est séparé suivant trois volumes. Un premier volume V1 représente le volume d'air encore compris dans l'enceinte hermétique 2. L'air ayant une masse volumique supérieure à la masse volumique du gaz porteur, ce premier volume V1 se positionne au plus bas selon l'axe longitudinal A1 dans l'enceinte hermétique 2, au niveau de la poupe 6. Avantageusement, la vanne d'évacuation 62 étant disposée contre la poupe 6 de l'enceinte hermétique 2, le premier volume V1 d'air peut être expulsé au fur et à mesure de l'ascension du dispositif de portabilité variable 1. Un deuxième volume V2 représente le volume de gaz porteur libéré du premier ballonnet hermétique 3 par l'ouverture 34. En effet, bien que le second ballonnet hermétique 3 soit ouvert, le gaz porteur contenu continue de se détendre. Le deuxième volume V2 augmente donc au fur et à mesure de l'ascension du dispositif de portabilité variable 1, agissant ainsi sur le premier volume V1 d'air qui doit être expulsé par la vanne d'évacuation 62. Le gaz porteur ayant une masse volumique inférieure à la masse volumique de l'air, le deuxième volume V2 se positionne naturellement au niveau de la proue 5, où le second ballonnet hermétique 3 contenait le gaz porteur initialement. Enfin, un troisième volume V3 est inséré entre le premier volume V1 d'air et le deuxième volume V2 de gaz porteur. Ce troisième volume représente un mélange entre le gaz porteur libéré du premier ballonnet hermétique 3 et l'air contenu initialement dans l'enceinte hermétique 2.

Tout le long de l'ascension du dispositif de portabilité variable 1, le deuxième volume V2 du gaz porteur augmente suite à la détente du gaz porteur alors que le premier volume V1 diminue suite à l'expulsion de l'air contenu dans le premier volume V1 par la vanne d'évacuation 62.

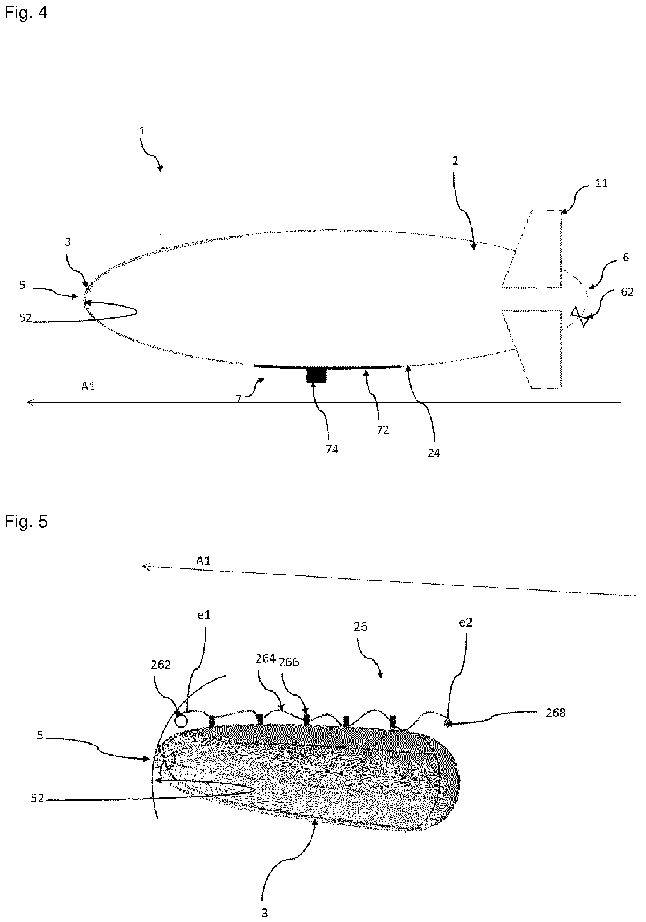

En outre, dans un autre mode de réalisation de l'invention, l'enceinte hermétique 2 comprend un dispositif de rétractation 26 du premier ballonnet hermétique 3 représenté en figure 5. Le dispositif de rétractation 26 permet d'accoler le premier ballonnet hermétique 3 ouvert contre la face interne 52 de la proue 5 de l'enceinte hermétique 2. De cette manière, le premier ballonnet hermétique 3 est fixé contre la face interne 52 de la proue 5 et ne se déplace pas dans l'enceinte hermétique 2, ce qui peut présenter un risque pour la manoeuvrabilité du dispositif de portabilité variable 1. De plus, la rétractation du premier ballonnet hermétique 3 contre la face interne 52 de la proue 5 permet de libérer tout le gaz porteur contenu initialement dans le premier ballonnet hermétique 3 dans l'enceinte hermétique 2.

L'ascension verticale, comme représenté en figure 3, se poursuit jusqu'à ce que le premier volume V1 et le troisième volume V3 soient totalement expulsés, c'est-à-dire lorsque l'enceinte hermétique 2 ne contient que le gaz porteur détendu. Lorsque l'enceinte hermétique 2 ne contient que le deuxième volume V2 de gaz porteur, le centre de masse du dispositif de portabilité variable 1 se recentre et le dispositif de portabilité variable 1 passe alors de la position verticale représentée en figure 3 à la position horizontale représentée en figure 1.

Afin de faciliter cette rotation contre-horaire du dispositif de portabilité variable 1, le dispositif d'inclinaison additionnel 7 passe de la position reculée P2, représentée en figure 3, à la position d'équilibre P1 représentée en figure 1. De cette manière, le centre de masse global du dispositif de portabilité variable 1 retourne à sa position d'équilibre et le dispositif de portabilité variable 1 repasse sur le plan horizontal.

L'utilisation du dispositif d'inclinaison additionnel 7 n'est pas obligatoire pour que le dispositif de portabilité variable 1 passe de la position verticale représentée en figure 3 à la position horizontale représentée en figure 1. En effet, le dispositif de portabilité variable 1, rempli uniquement de gaz porteur, va naturellement revenir à une position d'équilibre sur le plan horizontal. Néanmoins, le dispositif d'inclinaison additionnel 7 peut être considéré comme une sécurité assurant le bon placement du dispositif de portabilité variable 1 sur le plan horizontal.

La figure 4 représente une vue schématisée du dispositif de portabilité variable selon une variante de l'invention. Le dispositif de portabilité variable 1, selon la variante de l'invention, comporte l'enceinte hermétique 2 sous pression accueillant l'air et le premier ballonnet hermétique 3 disposé à l'intérieur de l'enceinte hermétique 2 accueillant sous pression le gaz de masse volumique inférieur à la masse volumique de l'air, ou gaz porteur. Comme dit précédemment, le premier ballonnet hermétique 3 est obtenu à partir d'un matériau élastique tel qu'un type de plastique ou autre élastomère et comporte un moyen de perforation 34 du premier ballonnet hermétique 3.

Comme énoncé précédemment, le dispositif de portabilité variable 1 comprend la vanne d'évacuation 62, placée au niveau de la poupe 6 permettant d'expulser l'air contenu à l'intérieur de l'enceinte hermétique 2 vers le milieu extérieur au dispositif de portabilité variable 1 et le dispositif d'inclinaison additionnel 7 placé contre une surface inférieure 24 de l'enceinte hermétique 2 à l'extérieur du dispositif de portabilité variable 1.

A la différence de l'invention présente en figure 2, lors de la phase précédant le décollage du dispositif de portabilité variable 1, le ballonnet hermétique 3 est rempli initialement du gaz porteur. Ainsi, lorsque que le décollage se met en place et que l'ascension débute, le gaz porteur est déjà contenu par le premier ballonnet hermétique 3 et le dispositif de portabilité variable 1 se place plus rapidement à la position verticale.

Toutefois, le passage de la position horizontale à la position verticale, lors du décollage du dispositif de portabilité variable 1, doit être contrôlé afin de ne pas abîmer voire détruire des empennages 11 du dispositif de portabilité variable 1 contre le sol.

Lorsque le décollage se met en place et l'ascension débute, le dispositif de portabilité variable 1 se place à la verticale. Le gaz porteur se détend alors et augmente le volume du premier ballonnet hermétique 3.

Comme énoncé précédemment, l'augmentation du volume du premier ballonnet hermétique 3 implique une diminution du volume d'air compris à l'intérieur de l'enceinte hermétique 2 qui se traduit par une expulsion de l'air par la vanne d'évacuation 62 vers le milieu extérieur.

En position verticale, la proue 5 pointe alors dans une direction de l'ascension qui est la direction de montée du dispositif de portabilité variable 1, alors que la poupe 6 pointe dans la direction opposée, c'est-à-dire vers le sol.

La diminution du volume d'air contenu dans l'enceinte hermétique 2 en parallèle de l'augmentation du volume du premier ballonnet hermétique 3 se poursuit jusqu'à l'ouverture du premier ballonnet hermétique 3. L'ouverture du premier ballonnet hermétique 3 dans l'enceinte hermétique 2 se fait lorsque le dispositif de portabilité variable 1 atteint une altitude jugée proche de l'altitude finale du dispositif de portabilité variable 1.

Le volume compris dans l'enceinte hermétique 2 n'est alors plus rempli uniquement d'air mais est séparé suivant trois volumes. Comme énoncé précédemment, l'enceinte hermétique 2 contient alors le premier volume V1 représentant le volume d'air encore compris dans l'enceinte hermétique 2, le deuxième volume V2 représentant le volume de gaz porteur libéré du premier ballonnet hermétique 3 et le troisième volume V3 est inséré entre le premier volume V1 d'air et le deuxième volume V2 de gaz porteur représentant le mélange entre le gaz porteur libéré du premier ballonnet hermétique 3 et l'air contenu initialement dans l'enceinte hermétique 2. Le deuxième volume V2 augmente donc au fur et à mesure de l'ascension du dispositif de portabilité variable 1, agissant ainsi sur le premier volume V1 d'air qui doit être expulsé par la vanne d'évacuation 62.

L'enceinte hermétique 2 comprend également le dispositif de rétractation 26 du premier ballonnet hermétique 3. Le dispositif de rétractation 26 permet d'accoler le premier ballonnet hermétique 3 ouvert contre la face interne 52 de la proue 5 de l'enceinte hermétique 2. De cette manière, le premier ballonnet hermétique 3 est fixé contre la face interne 52 de la proue 5 et ne se déplace pas dans l'enceinte hermétique 2.

La figure 5 représente une vue schématisée du dispositif de rétractation 26 du premier ballonnet hermétique 3 à l'intérieur du dispositif de portabilité variable 1 selon l'invention. Le dispositif de rétractation 26 du premier ballonnet hermétique 3 comprend un enrouleur 262 en contact direct avec la face interne 52 de la proue 5 de l'enceinte hermétique 2, une liaison filaire 264 dont une première extrémité e1 est en contact avec l'enrouleur 262, un dispositif d'arrêt 268 est placé au niveau d'une seconde extrémité e2. Des interfaces de passage 266 sont placées et alignées selon l'axe horizontal A1 contre le premier ballonnet hermétique 3 de sorte à ce que la liaison filaire 264 traverse chacune des interfaces de passage 266. Lorsque le premier ballonnet hermétique 3 est ouvert et que le gaz porteur s'en échappe, l'enrouleur 262 s'active et enroule la liaison filaire 264. La liaison filaire 264 est donc tirée vers l'enrouleur 262, tout comme le dispositif d'arrêt 268. Le dispositif d'arrêt 268 est de dimension supérieure à l'orifice des interfaces de passage 266. Autrement dit, les interfaces de passage 266 sont configurées pour laisser coulisser la liaison filaire 264 et pour bloquer le dispositif d'arrêt 268. Les interfaces de passage 266, ne permettant pas le passage du dispositif d'arrêt 268, se retrouvent alors tirées une à une, suite à l'action du dispositif d'arrêt 268, lui-même attiré par l'enrouleur 262, dans la direction de l'enrouleur 262. Lorsque le dispositif d'arrêt 268 se trouve au contact de l'enrouleur 262, l'enrouleur 262 cesse d'attirer la liaison filaire 264 et le premier ballonnet hermétique 3 se retrouve rétracté contre la face interne 52 de la proue 5.

## Revendications

1. Dispositif de portabilité variable (1) **caractérisé en ce qu'**il comporte :
- Une enceinte hermétique (2) sous pression accueillant de l'air,
- Un premier ballonnet hermétique (3) disposé à l'intérieur de l'enceinte hermétique (2) accueillant sous pression un gaz de masse volumique inférieure à la masse volumique de l'air, le premier ballonnet hermétique (3) comportant un moyen de perforation (34) du premier ballonnet hermétique (3), le dispositif étant **caractérisé en ce que** le moyen de perforation est configuré pour libérer le gaz de masse volumique inférieure à la masse volumique de l'air dans l'enceinte hermétique (2) de sorte que l'enceinte hermétique (2) contienne l'air et le gaz de masse volumique inférieure à la masse volumique de l'air en contact l'un avec l'autre.

2. Dispositif de portabilité variable (1) selon la revendication 1, dans lequel le dispositif de portabilité variable (1) comporte un second ballonnet hermétique (4) disposé à l'intérieur de l'enceinte hermétique (2) et connecté fluidiquement au premier ballonnet hermétique (3).

3. Dispositif de portabilité variable (1) selon la revendication 2, l'enceinte hermétique (2) comprenant une surface supérieure (22), dans lequel le second ballonnet hermétique (4) est disposé contre la surface supérieure (22) de l'enceinte hermétique (2).

4. Dispositif de portabilité variable (1) selon l'une des revendications 1 à 3, l'enceinte hermétique (2) comprenant une proue (5), dans lequel le premier ballonnet hermétique (3) est disposé contre une face interne (52) de la proue (5) de l'enceinte hermétique (2).

5. Dispositif de portabilité variable (1) selon l'une des revendications 1 à 4, l'enceinte hermétique (2) comprenant une poupe (6), dans lequel au moins une vanne d'évacuation (62) est disposée contre la poupe (6) de l'enceinte hermétique (2).

6. Dispositif de portabilité variable (1) selon l'une des revendications 1 à 5, dans lequel le premier ballonnet hermétique (3) est réalisé à partir d'un matériau plastique.

7. Dispositif de portabilité variable (1) selon la revendication 4, l'enceinte hermétique (2) comprenant un dispositif de rétractation (26) du premier ballonnet hermétique (3), dans lequel le dispositif de rétractation (26) du premier ballonnet hermétique (3) comprend un enrouleur (262) en contact direct avec la face interne (52) de la proue (5) de l'enceinte hermétique (2), le dispositif de rétractation (26) du premier ballonnet hermétique (3) comprend une liaison filaire (264) dont une première extrémité e1 est en contact avec l'enrouleur (262), une seconde extrémité e2 est en contact avec le premier ballonnet hermétique (3).

8. Dispositif de portabilité variable (1) selon l'une des revendications 1 à 7, s'étendant selon un premier axe longitudinal A1, comprenant un dispositif d'inclinaison additionnel (7) disposé contre le dispositif de portabilité variable (1).

9. Dispositif de portabilité variable (1) selon la revendication 8, dans lequel le dispositif d'inclinaison additionnel (7) comprend une mobilité transversale selon l'axe longitudinal A1 d'une position d'équilibre P1 à une position reculée P2.

10. Dispositif de portabilité variable (1) selon l'une des revendications 1 à 9, dans lequel le moyen de perforation (34) du premier ballonnet hermétique (3) est actionné à l'aide d'un contrôleur.

11. Dispositif de portabilité variable (1) selon l'une des revendications 1 à 10, dans lequel le premier ballonnet hermétique (3) est interchangeable.

## Patentansprüche

1. Variable Portabilitätsvorrichtung (1), **dadurch gekennzeichnet, dass** sie Folgendes aufweist:
- eine hermetische Einhausung (2) unter Druck, die Luft aufnimmt,
- einen ersten hermetischen Ballon (3), der innerhalb der hermetischen Einhausung (2) angeordnet ist und unter Druck ein Gas mit einem spezifischen Gewicht aufnimmt, das geringer als das spezifische Gewicht von Luft ist, wobei der erste hermetische Ballon (3) ein Mittel zum Perforieren (34) des ersten hermetischen Ballons (3) aufweist, wobei die Vorrichtung **dadurch gekennzeichnet ist, dass** das Perforationsmittel so konfiguriert ist, dass es das Gas mit einem spezifischen Gewicht, das geringer als das spezifische Gewicht von Luft ist, in die hermetische Einhausung (2) freigibt, so dass die hermetische Einhausung (2) die Luft und das Gas mit einem spezifischen Gewicht, das geringer als das spezifische Gewicht von Luft ist, in Kontakt miteinander enthält.

2. Variable Portabilitätsvorrichtung (1) nach Anspruch 1, wobei die variable Portabilitätsvorrichtung (1) einen zweiten hermetischen Ballon (4) aufweist, der innerhalb der hermetischen Einhausung (2) angeordnet und mit dem ersten hermetischen Ballon (3) fluidisch verbunden ist.

3. Variable Portabilitätsvorrichtung (1) nach Anspruch 2, wobei die hermetische Einhausung (2) eine obere Oberfläche (22) umfasst, wobei der zweite hermetische Ballon (4) an der oberen Oberfläche (22) der hermetischen Einhausung (2) angeordnet ist.

4. Variable Portabilitätsvorrichtung (1) nach einem der Ansprüche 1 bis 3, wobei die hermetische Einhausung (2) einen Bug (5) umfasst, wobei der erste hermetische Ballon (3) an einer Innenfläche (52) des Bugs (5) der hermetischen Einhausung (2) angeordnet ist.

5. Variable Portabilitätsvorrichtung (1) nach einem der Ansprüche 1 bis 4, wobei die hermetische Einhausung (2) ein Heck (6) umfasst, wobei mindestens ein Auslassventil (62) an dem Heck (6) der hermetischen Einhausung (2) angeordnet ist.

6. Variable Portabilitätsvorrichtung (1) nach einem der Ansprüche 1 bis 5, wobei der erste hermetische Ballon (3) aus einem Kunststoffmaterial hergestellt ist.

7. Variable Portabilitätsvorrichtung (1) nach Anspruch 4, wobei die hermetische Einhausung (2) eine Vorrichtung (26) zum Zurückziehen des ersten hermetischen Ballons (3) umfasst, wobei die Vorrichtung (26) zum Zurückziehen des ersten hermetischen Ballons (3) eine Aufrollvorrichtung (262) umfasst, die in direktem Kontakt mit der Innenseite (52) des Bugs (5) der hermetischen Einhausung (2) steht, wobei die Vorrichtung (26) zum Zurückziehen des ersten hermetischen Ballons (3) eine Schnurverbindung (264) umfasst, von der ein erstes Ende e1 in Kontakt mit der Aufrollvorrichtung (262) steht und ein zweites Ende e2 in Kontakt mit dem ersten hermetischen Ballon (3) steht.

8. Variable Portabilitätsvorrichtung (1) nach einem der Ansprüche 1 bis 7, die sich entlang einer ersten Längsachse A1 erstreckt, umfassend eine zusätzliche Neigungsvorrichtung (7), die an der variablen Portabilitätsvorrichtung (1) angeordnet ist.

9. Variable Portabilitätsvorrichtung (1) nach Anspruch 8, wobei die zusätzliche Neigungsvorrichtung (7) eine Querbeweglichkeit entlang der Längsachse A1 von einer Gleichgewichtsposition P1 zu einer zurückgesetzten Position P2 umfasst.

10. Variable Portabilitätsvorrichtung (1) nach einem der Ansprüche 1 bis 9, wobei das Mittel zum Perforieren (34) des ersten hermetischen Ballons (3) mittels einer Steuerung betätigt wird.

11. Variable Portabilitätsvorrichtung (1) nach einem der Ansprüche 1 bis 10, wobei der erste hermetische Ballon (3) austauschbar ist.

## Claims

1. Variable-lift device (1), **characterised in that** it is has:
- a pressurised airtight enclosure (2) accommodating air,
- a first airtight ballonet (3) arranged inside the airtight enclosure (2) accommodating under pressure a gas with a density lower than the density of air, the first airtight ballonet (3) having a perforation means (34) for perforating the first airtight ballonet (3), the device being configured **in that** the perforation means is configured to release the gas with a density lower than the density of air into the airtight enclosure (2) such that the airtight enclosure (2) contains the air and the gas with a density lower than the density of air in contact with each other.

2. Variable-lift device (1) according to claim 1, wherein the variable-lift device (1) has a second airtight ballonet (4) arranged inside the airtight enclosure (2) and fluidically connected to the first airtight ballonet (3).

3. Variable-lift device (1) according to claim 2, the airtight enclosure (2) comprising a top surface (22), wherein the second airtight ballonet (4) is arranged against the top surface (22) of the airtight enclosure (2).

4. Variable-lift device (1) according to one of claims 1 to 3, the airtight enclosure (2) comprising a bow (5), wherein the first airtight ballonet (3) is arranged against an inner face (52) of the bow (5) of the airtight enclosure (2).

5. Variable-lift device (1) according to one of claims 1 to 4, the airtight enclosure (2) comprising a stern (6), wherein at least one discharge valve (62) is arranged against the stern (6) of the airtight enclosure (2).

6. Variable-lift device (1) according to one of claims 1 to 5, wherein the first airtight ballonet (3) is produced from a plastic material.

7. Variable-lift device (1) according to claim 4, the airtight enclosure (2) comprising a retraction device (26) for retracting the first airtight ballonet (3), wherein the retraction device (26) for retracting the first airtight ballonet (3) comprises a winder (262) in direct contact with the inner face (52) of the bow (5) of the airtight enclosure (2), the retraction device (26) for retracting the first airtight ballonet (3) comprises a wired link (264), a first end e1 of which is in contact with the winder (262), and a second end e2 of which is in contact with the first airtight ballonet (3).

8. Variable-lift device (1) according to one of claims 1 to 7, extending along a first longitudinal axis A1, comprising an additional inclination device (7) arranged against the variable-lift device (1).

9. Variable-lift device (1) according to claim 8, wherein the additional inclination device (7) comprises a transverse mobility along the longitudinal axis A1 from a position of balance P1 to a retreated position P2.

10. Variable-lift device (1) according to one of claims 1 to 9, wherein the perforation means (34) for perforating the first airtight ballonet (3) is actuated using a controller.

11. Variable-lift device (1) according to one of claims 1 to 10, wherein the first airtight ballonet (3) is interchangeable.
